# EUROPEAN PATENT SPECIFICATION

(11) **EP 3 774 467 B1**
(45) Date of publication and mention of the grant of the patent: **21.02.2024**
(21) Application number: 19716830.5
(22) Date of filing: 29.03.2019
(51) Int. Cl.: B60T 13/74, F16D 121/24

(54) **MOTOR CONTROL MODULE, ACTUATOR AND ELECTROMECHANICAL BRAKE APPARATUS**
MOTORSTEUERMODUL, AKTUATOR UND ELEKTROMECHANISCHE BREMSVORRICHTUNG
MODULE DE COMMANDE DE MOTEUR, ACTIONNEUR ET APPAREIL DE FREIN ÉLECTROMÉCANIQUE

(30) Priority: 30.03.2018 CN 201810298895
(43) Date of publication of application: 17.02.2021
(73) Proprietor: Haldex Brake Products Aktiebolag, 261 24 Landskrona (SE)
(72) Inventor: WU, Gang, Shanghai, 201804 (CN); LINDQVIST, Anders, Shanghai, 201804 (CN); NILSSON, Anders, Shanghai, 201804 (CN); SONG, Zenglai, Shanghai, 201804 (CN); DONG, Xianbin, Shanghai, 201804 (CN); FEI, Yibo, Shanghai, 201804 (CN)
(74) Representative: REHBERG HÜPPE + PARTNER
(86) International application number: PCT/EP2019/058090
(87) International publication number: WO 2019/185917

(56) References cited:
- EP-A1- 1 589 547
- CN-B- 101 170 012
- US-A1- 2008 091 326
- US-A1- 2013 010 426
- US-A1- 2016 262 257

## Description

### FIELD

The present invention relates to the field of mechanical brake technologies, and more particularly to a motor control module for a vehicle brake system, an actuator having the motor control module, and an electromechanical brake apparatus applying the actuator. The vehicle brake system is in particular used in a utility vehicle or commercial vehicle or bus.

### BACKGROUND

An electromechanical brake (EMB) apparatus generally has an actuator and a disk brake. A torque generated by the actuator acts on a brake caliper of the disc brake via a mechanical structure, which realizes a tight pressing between the brake caliper and the brake disc, thereby generating a desired braking force. Compared with a conventional electro-hydraulic brake (EHB), the EM B apparatus is easier to manufacture and assemble. It has a quick braking response speed and a good control performance. Furthermore, it is easy to realize a linear control. Mounting the EM B apparatus on a vehicle brake disc in replacement of the conventional EHB is a leap forward from conventional braking means.

As a power source for the EM B apparatus, the actuator controls a torque output. The actuator comprises a motor control module having a circuit board and a capacitor assembly. The capacitor assembly mainly plays roles of storing energy, filtering and high-frequency decoupling, etc. For example, in an AC (Alternative Current) motor, a plurality of parallel-connected capacitors are adopted to obtain a better filtering effect; or at starting of the motor, to compensate for a starting voltage of the motor, playing a role as auxiliary power supply.

For the motor control module above, in the prior art, a plurality of connection holes should be provided on the circuit board, and pins of the capacitors are welded (after being passed through the connection holes) to a wired circuit at a back face of the circuit board. To mount the plurality of capacitors on the circuit board in such a manner, some area of the circuit board will be occupied by a capacitor assembly, and such area occupied by the capacitor assembly cannot receive other electronic elements. To arrange the other electronic elements on the circuit board, they should be distributed more densely on the circuit board, or a circuit board of a larger size should be used so as to satisfy circuit design requirements. Consequently, during a circuit design process, space for the capacitor assembly should be reserved on the circuit board while mounting of other electronic elements should also be considered, which increases the complexity of circuit design. Additionally, such a motor control module causes a relatively inefficient product line assembly. Besides, mistakes on assembly operations would also possibly cause direct scrapping of the circuit board. In view of the above, it is necessary to optimize structural design of the motor control module.

US 2013/010426 A1 discloses a motor control module. The motor control module comprises a circuit board, a capacitor assembly including a plurality of capacitors and an electrically conductive connecting element for electrically connecting the plurality of capacitors. The electrically conductive connecting element is electrically connected to the circuit board.

CN 101 170 012 B discloses energy storage units comprising stacked capacitors. Electrodes of the capacitors are soldered to metal terminals which are fixed and connected to the circuit board by a solder, the capacitors being disposed with a gap above the circuit board.

Further prior art is known from US 2008/091326 A1**,** EP 1 589 547 A1 and US 2016/262257 A1**.**

### OBJECT OF THE INVENTION

An object of the present invention is to provide a motor control module for a vehicle brake system having an optimized connection structure between a circuit board and a capacitor assembly.

### SOLUTION

According to the present invention, the object of the invention is solved by the features of the independent claims. Additional preferred embodiments according to the invention are to be seen in the dependent claims.

### DESCRIPTION OF THE INVENTION

To achieve the object above, the present invention proposes a technical solution as follows:
A motor control module, comprising: a circuit board, a capacitor assembly including a plurality of capacitors, and an electrically conductive connecting element for electrically connecting the plurality of capacitors, the electrically conductive connecting element being electrically connected to the circuit board and being disposed in a suspended state relative to the circuit board, such that a gap is maintained between the capacitor assembly and the circuit board.

The inventive motor control module further comprises a capacitor holder on which the plurality of capacitors are positioned to form the capacitor assembly.

According to the invention, the capacitor assembly is mounted at a side of the capacitor holder facing away from the circuit board, and the electrically conductive connecting element is mounted at a side of the capacitor holder facing the circuit board.

In an embodiment of the motor control module, the capacitor holder is provided with a capacitor positioning portion via which the capacitors are at least partially positioned on the capacitor holder, pins of the capacitors being electrically connected to the electrically conductive connecting element.

In an embodiment of the motor control module, the capacitor positioning portion comprises a positioning groove recessed in a surface of the capacitor holder and a plurality of positioning studs dispersedly arranged in the positioning groove, the plurality of positioning studs partitioning the positioning groove into a plurality of accommodating zones, bodies of the capacitors being entirely or partially inserted in the accommodating zones; or the capacitor positioning portion comprises a plurality of positioning grooves that are recessed in the surface of the capacitor holder and spaced from one another, the bodies of the capacitors being entirely or partially inserted into the positioning groove; or the capacitor positioning portion comprises positioning holes through the capacitor holder, bodies of the capacitors being entirely or partially through-fitted in the positioning holes.

In an embodiment of the motor control module, vias are provided on the capacitor holder, the pins of the capacitors being passed through the vias to be electrically connected with the electrically conductive connecting element.

In an embodiment of the motor control module, the electrically conductive connecting element is fitted to the capacitor holder by at least one of: a snap-fit, a screw connection, melting, welding, and a press-fit.

In an embodiment of the motor control module, the electrically conductive connecting element comprises a first electrically conductive element and a second electrically conductive element, and the capacitor holder has an insolating rib that insulates the first electrically conductive element from the second electrically conductive element.

In an embodiment of the motor control module, the capacitor holder has at least one support portion extending towards the circuit board direction.

In an embodiment of the motor control module, the capacitor holder comprises a first holder and a second holder which are separately formed, two ends of the bodies of the capacitors being positioned on the first holder and the second holder, respectively.

In an embodiment of the motor control module, the first holder and the second holder are securely connectable with each other to hold and secure the capacitor assembly therebetween.

In an embodiment of the motor control module, the motor control module further comprises an electronic element positioned on the capacitor holder.

In an embodiment of the motor control module, the plurality of capacitors are adhesively attached to form the capacitor assembly.

In an embodiment of the motor control module, the plurality of capacitors are encapsulated within a housing to form the capacitor assembly, pins of the capacitors extending out of the housing for connection with the electrically conductive connecting element.

In an embodiment of the motor control module, the electrically conductive connecting element comprises a first electrically conductive element and a second electrically conductive element, wherein first pins of the capacitors are electrically connected to the first electrically conductive element, and the second pins thereof are connected to the second electrically conductive element, to cause the capacitor assembly to be connected to the circuit board.

In an embodiment of the motor control module, the first electrically conductive element has a first pin connecting portion in comb-shaped distribution, and the second electrically conductive element has a second pin connecting portion in a comb-shaped distribution, the first pin connecting portion and the second pin connecting portion being interlaced with each other.

In an embodiment of the motor control module, the plurality of capacitors are arranged circumferentially to form an annular capacitor assembly; or the plurality of capacitors are arranged in a sector shape to form a sector-shaped capacitor assembly; or the plurality of capacitors are arranged linearly to form a rectangular capacitor assembly.

In an embodiment of the motor control module, the plurality of capacitors are at least arranged in two rows, wherein two adjacent rows of capacitors are staggered in abutment with each other in an arrangement direction.

In an embodiment of the motor control module, the capacitors are cylindrical capacitors or chip capacitors.

In an embodiment of the motor control module, the capacitors lie flatly or vertically relative to the electrically conductive connecting element.

In an embodiment of the motor control module, the electrically conductive connecting element comprises a body portion for electrically connecting the capacitor assembly and a connection terminal disposed on the body portion, the circuit board being provided with a connection point on which the connection terminal is secured.

In an embodiment of the motor control module, the electrically conductive connecting element further comprises a bent portion connected between the body portion and the connection terminal. In an embodiment of the motor control module, the motor control module further comprises an extended connecting element via which the electrically conductive connecting element and the circuit board are electrically connected.

In an embodiment of the motor control module, the circuit board is provided with a control circuit and a power supply circuit; or the circuit board comprises a control circuit board and a power supply circuit board that are separately provided, the electrically conductive connecting element electrically connecting the control circuit board and/or the power supply circuit board.

The present invention further provides an actuator, comprising an electric motor and the motor control module according to any of the technical solutions above.

In an embodiment of the actuator, the actuator further comprises a housing within which the electric motor and the motor control module are accommodated.

In an embodiment of the actuator, an output shaft of the electric motor is passed through or extends through the circuit board and/or the capacitor assembly.

The present invention further provides an electromechanical brake apparatus, comprising the actuator according to any of the technical solutions above and a brake directly or indirectly driven by the actuator.

In an embodiment of the electromechanical brake apparatus, the brake is a disc brake or a drum brake.

In an embodiment of the electromechanical brake apparatus, the electromechanical brake apparatus further comprises a transmission unit via which the actuator drives the brake to act.

The present invention has in particular the following advantageous effects:
1. The motor control module for a vehicle brake system according to the present invention comprises: a circuit board, a capacitor assembly including a plurality of capacitors and an electrically conductive connecting element for electrically connecting the plurality of capacitors, the electrically conductive connecting element being electrically connected to the circuit board and being disposed in a suspended state relative to the circuit board, such that a gap is maintained between the capacitor assembly and the circuit board.

For assembling and manufacturing of the motor control module the following advantage might result from the inventive design: because the present invention adopts an electrically conductive connecting element as a connection medium between the capacitor assembly and the circuit board, the capacitor assembly may be first fitted to the electrically conductive connecting element, the electrically conductive connecting element being then connected to the circuit board. In this way, modularized assembly of the plurality of capacitors into a capacitor assembly is realized, which enhances the production line assembly efficiency. Moreover, compared with the prior art where a plurality of capacitors are welded to the circuit board one by one, the connection between the electrically conductive connecting element and the circuit board in the present invention is simpler, which reduces the assembly complexity while effectively ameliorating the issue of circuit board damage caused by improper operation, such that even if the electrically conductive connecting element is damaged, the cost of replacing or repairing it is far less than that of the circuit board.

For circuit design of the motor control module the following advantage might result from the inventive design: because the electrically conductive connecting element of the present invention is in a suspended state relative to the circuit board, a gap is maintained between the capacitor assembly and the circuit board, such that an area on the circuit board which was originally occupied by the capacitor assembly may be available for mounting other electronic elements, i.e., the space originally occupied by the capacitor assembly on the circuit board is saved for mounting other electronic elements, such that mounting of the other electronic elements will not be restricted by the capacitor assembly, which thereby satisfies a versatility of circuit designs. It needs not consider reservation for positions of the capacitors when designing a wired circuit and mounting electronic elements on the circuit board, such that the limited space on the circuit board is sufficiently utilized to mount other electronic elements than the capacitors. In this case, when the same number of elements are used, a smaller-sized circuit board may apply, which reduces the cost while reducing the space occupied by the whole motor control module.

For use of the motor control module the following advantage might result from the inventive design: because the electric connection between the capacitor assembly and the circuit board is implemented by an electrically conductive connecting element, the current flows via the electrically conductive connecting element into the wired circuit of the circuit board. This design may greatly dampen temperature rise of the circuit board. Besides, the gap maintained between the capacitor assembly and the circuit board also avoids direct transfer of the heat from the capacitors onto the circuit board, which reduces heat productivity of the circuit board and thereby guarantees operation stability of the motor control module.
2. The motor control module further comprises a capacitor holder on which the plurality of capacitors are positioned to form the capacitor assembly. It may be understood that vibrations generated when the motor is working will cause jitter of the capacitors and further affect connection reliability between the capacitors and the electrically conductive connecting element. By positioning the plurality of capacitors on the capacitor holder, the stationarity of the capacitors is enhanced and capacitor jitter is reduced, which facilitates maintaining the connection reliability between the capacitors and the electrically conductive connecting element, avoids occurrence of issues such as breakage of pins, falloff of the capacitors, etc. due to jitter of the capacitors.
3. The capacitor assembly is mounted at a side of the capacitor holder facing away from the circuit board, and the electrically conductive connecting element is mounted at a side of the capacitor holder facing the circuit board. By mounting both of the electrically conductive connecting element and the capacitor assembly on the capacitor holder, the electrically conductive connecting element and the capacitor assembly may be effectively fixed, such that even if vibrations occur during the motor is working, the electrically conductive connecting element and the capacitors are still stationary relative to each other, which may maintain electrical connection reliability between the capacitors and the electrically conductive connecting element. Additionally, the capacitor assembly is mounted at a side of the capacitor assembly facing away from the circuit board, and the capacitor assembly and the circuit board are spaced by the capacitor holder, which may reduce the heat transferred from the capacitor assembly to the circuit board.
4. The electrically conductive connecting element comprises a first electrically conductive element and a second electrically conductive element, and the capacitor holder has an insolating rib that insolates and insulates the first electrically conductive element from the second electrically conductive element. To effectively insolate the first electrically conductive element from the second electrically conductive element, short-circuit due to contact therebetween may be prevented, thereby providing a higher safety.
5. The capacitor holder has at least one support portion extending towards the circuit board direction. The support portion plays a role of supporting the capacitor holder to avoid the capacitor holder from collapsing towards the circuit board, which would otherwise cause contact of the capacitors with the circuit board or the electronic elements on the circuit board.
6. The first electrically conductive element has a first pin connecting portion in comb-shaped distribution, and the second electrically conductive element has a second pin connecting portion in a comb-shaped distribution, the first pin connecting portion and the second pin connecting portion being interlaced with each other. By accommodating the pin connection portions with the gaps formed by the comb-shaped configurations, the first electrically conductive element and the second electrically conductive element may be disposed in juxtaposition more compactly, thereby saving space.
7. The plurality of capacitors are at least arranged in two rows, wherein the two adjacent rows of capacitors are staggered in abutment with each other in an arrangement direction. The gap between two adjacent capacitors in a same row of capacitors is utilized to accommodate the corresponding capacitor in the other row of capacitors, such that arrangement of the plurality of capacitors is more compact, which reduces the space occupied by the capacitor assembly.
8. The motor control module further comprises an extended connecting element via which the electrically conductive connecting element and the circuit board are electrically connected. The extended connecting element not only acts as an extended portion of the electrically conductive connecting element, such that the electrically conductive connecting element may be electrically connected to a connection point that is relatively distant from the capacitor assembly on the circuit board, but also may supply the electric energy of the capacitor assembly to other electronic elements or circuits on the circuit board, respectively, to satisfy the power supply needs of the other elements and circuits on the circuit board. For example, the capacitor assembly and the electrically conductive connecting element are disposed in a certain specific area of the circuit board, and by an extended connecting element with a matched appropriate length and profile, the electrical connection between the electrically conductive connecting element and other electronic elements and circuits in another area of the circuit board is implemented.
9. In the actuator, the electric motor and the motor control module are accommodated in the housing. For the motor control module in the prior art, because some area of the circuit board is occupied by the capacitor assembly, to consider arrangement of the other electronic elements on the circuit board, a larger-sized circuit board is needed, which causes a relatively large size of the motor control module as a whole. Consequently, the motor control module cannot be installed in the housing. Instead, for the motor control module according to the present invention, a smaller-sized circuit board may be adopted, such that the electric motor and the motor control module may be accommodated in the housing of the actuator, which enhances the integration degree and compactness of the actuator and facilitates disassembly and maintenance.

These characteristics and advantages of the present invention will be disclosed in detail in the preferred embodiments below with reference to the accompanying drawings.

Advantageous developments of the invention result from the claims, the description and the drawings. The advantages of features and of combinations of a plurality of features mentioned at the beginning of the description only serve as examples and may be used alternatively or cumulatively without the necessity of embodiments according to the invention having to obtain these advantages. Without changing the scope of protection as defined by the enclosed claims, the following applies with respect to the disclosure of the original application and the patent: further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims.

The number of the features mentioned in the claims and in the description is to be understood to cover this exact number and a greater number than the mentioned number without having to explicitly use the adverb "at least". For example, if an element is mentioned, this is to be understood such that there is exactly one element or there are two elements or more elements.

Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE DRAWINGS

Hereinafter, the present invention will be described in further detail with reference to the accompanying drawings:
- **Fig. 1**: is a schematic diagram of a motor control module in Embodiment I of the present invention;
- **Fig. 2**: is a structural schematic diagram of a circuit board in Embodiment I of the present invention;
- **Fig. 3**: is a structural schematic diagram of an electrically conductive element comprising a first electrically conductive element and a second electrically conductive element in Embodiment I of the present invention;
- **Fig. 4**: is a structural schematic diagram of a side of a capacitor holder opposite to the circuit board in Embodiment I of the present invention;
- **Fig. 5**: is a structural schematic diagram of a side of the capacitor holder facing the circuit board in Embodiment I of the present invention;
- **Fig. 6**: is an exploded diagram of the capacitor holder, capacitor assembly, and electrically conductive connecting elements in Embodiment I of the present invention;
- **Fig. 7**: is a schematic diagram of the capacitor assembly mounted to the capacitor holder in Embodiment I;
- **Fig. 8**: a schematic diagram of a motor control module in Embodiment invention;

- **Fig. 9**: is a stereoscopic schematic diagram of a partial structure of an actuator with a motor control module in a preferred embodiment of the present invention; and
- **Fig. 10**: is a sectional schematic diagram of a partial structure of the actuator with a motor control module in a preferred embodiment of the present invention.

### DETAILED DESCRIPTION OF EMBODIMENTS

In the description of the present invention, it needs to be understood that the oriental or positional relationships indicated by the terms "center", "longitudinal", "transverse", "length", "width", "thickness", "upper", "lower", "front", "rear", "left", "right", "vertical", "horizontal", "top", "bottom", "inner", "clockwise", "counterclockwise", etc. are oriental and positional relationships based on the drawings, which are intended only for facilitating or simplifying description of the present invention. The devices or elements might possess or might not possess those specific orientations and might have or might not have to be configured and operated with those specific orientations; therefore, they should not be understood as limitations to the present invention.

Besides, the terms "first" and "second" are only used for description purposes, which shall not be understood as indicating or implying an importance or implicitly indicating the number of technical features as indicated. Therefore, the features limited by "first" and "second" may explicitly or implicitly include one or more of the features. In the description of the present invention, unless otherwise indicated, "plurality" indicates two or above.

In the present invention, unless otherwise explicitly provided and limited, the terms such as "mount", "connected", "connection", and "fix" should be understood broadly, which, for example, may refer to a secured connection, a detachable connection, or an integral connection; which may be a mechanical connection or an electrical connection; which may be a direct connection or an indirect connection via an intermediate medium; which may also be a communication between the insides of two elements. To a person of normal skill in the art, specific meanings of the above terms in the present invention may be understood based on specific situations.

In the present invention, unless otherwise explicitly provided and limited, that a first feature is "above" or "below" a second feature may include a direct contact between the first feature and the second feature or may include a case where although the first feature and the second feature do not contact directly, they contact via a further feature therebetween. Moreover, that the first feature is "above" or "over" or "on" the second feature includes a case where the first feature is exactly or generally over the second feature or only indicates that the horizontal height of the first feature is higher than the second feature. That the first feature is "under" or "below" or "beneath" the second feature includes a case where the first feature is exactly or generally below the second feature or only indicates that the horizontal height of the first feature is lower than the second feature. Furthermore, the features "above", "below", "under" might relate to the normal operating position or mounting position of the related constructional element.

### Embodiment I

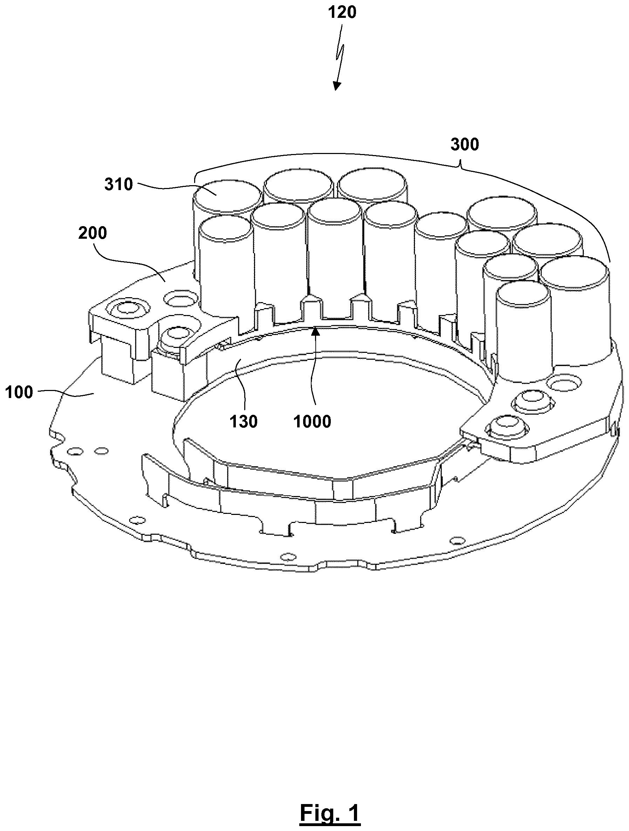

Referring to **Fig. 1****,** a motor control module 120 for a vehicle brake system according to the present invention comprises: a circuit board 100 a capacitor assembly 300 and an electrically conductive connecting element 1000. The capacitor assembly 300 includes a plurality of capacitors 310. The plurality of capacitors 310 is connected to the electrically conductive connecting element 1000 to form (through the electrically conductive connecting element 1000) the capacitor assembly 300 in which the plurality of capacitors 310 are electrically connected to each other. The electrically conductive connecting element 1000 is electrically connected to the circuit board 100 and is disposed in a suspended state relative to the circuit board 100, such that a gap 130 is maintained between the capacitor assembly 300 and the circuit board 100.

After the capacitor assembly 300 is connected to the circuit board 100 through the electrically conductive connecting element 1000, a structure with an upper layer stacking over a lower layer is formed by the capacitor assembly 300 and the circuit board 100. Except the portion connected to the circuit board 100, other portions of the electrically conductive connecting element 1000 are disposed in a suspended state relative to the circuit board 100, such that a gap 130 may be maintained between the capacitor assembly 300 connected to the electrically conductive connecting element 1000 and the circuit board 100. Consequently, an area on the circuit board 100 which was originally occupied by the capacitor assembly 300 may be available for mounting other electronic elements, e.g., SMD electronic elements. Accordingly, mounting of these electronic elements on the circuit board 100 will not be restricted by the capacitor assembly 300, which thereby satisfies a versatility of circuit designs. It needs not consider reservation of positions for the capacitors 310 when designing a wired circuit and mounting electronic elements on the circuit board 100, such that the limited space on the circuit board 100 is sufficiently utilized to mount other electronic elements than the capacitors 310. In this case, when the same number of elements are used, a smaller-sized circuit board may apply, which reduces the cost while reducing the space occupied by the entire motor control module 120.

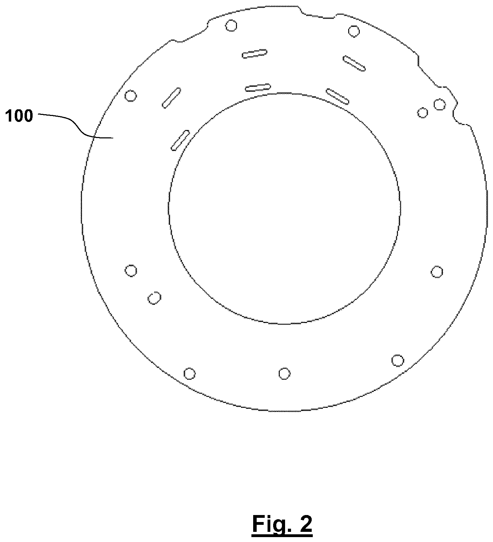

Hereinafter, the circuit board 100, the capacitor assembly 300, and the electrically conductive connecting element 1000 in the motor control module 120 will be described in detail:
A circuit board 100 usually refers to a printed circuit board, including a hard PCB board and an FPC board with a certain flexibility. Under the precondition of satisfying mount requirements of the capacitor assembly 300 and other electronic elements, the circuit board 100 may be designed into various shapes based on actual mount environments. E.g., to satisfy the built -in requirements, the circuit board 100 may be designed into shapes such as a disc, an annular ring, etc., as shown in **Fig. 2****.**

A capacitor assembly 300 is a work group formed by a plurality of capacitors 310, generally including two forms of connections: serial connection and parallel connection. A parallel-connected capacitor assembly has a constant withstanding voltage but a higher capacity. A serialconnected capacitor assembly has a higher withstanding voltage but a lower capacity. Therefore, the parallel-connected capacitor assembly or the serially-connected capacitor assembly may be selected based on actual circuit designs. The capacitor assembly 300 mainly plays a role of storing energy, filtering and high-frequency decoupling, etc. For example, in an AC (Alternative Current) motor, a plurality of parallel capacitors 310 are adopted to obtain a better filtering effect or at starting of the motor, to compensate for a starting voltage of the motor, playing a role for the auxiliary power supply. It needs to be noted that the capacitor 310 here should be understood broadly, which includes all capacitor elements that may implement functions of storing energy, filtering, and high-frequency decoupling, etc., e.g., various kinds of high-frequency capacitors, low-frequency capacitors, filtering capacitors, etc.. Based on the design needs, a cylindrical capacitor, a chip capacitor (SMD capacitor) or a combination of both may be used. For example, according to an embodiment of the present invention, the capacitor 310 is a cylindrical capacitor which lies vertically or flatly relative to the electrically conductive connecting element 1000. In another embodiment, the capacitor may be a chip capacitor, which lies vertically or flatly relative to the electrically conductive connecting element 1000.

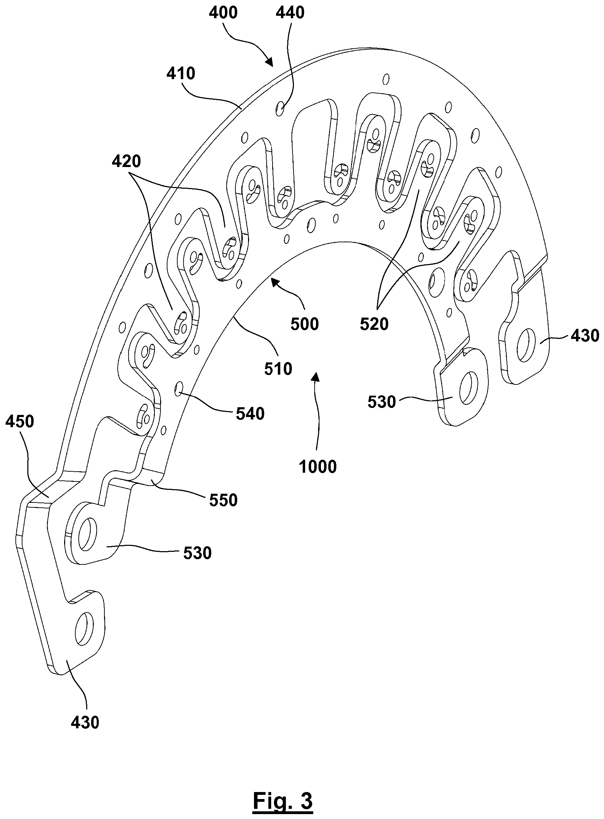

An electrically conductive connecting element 1000 serves for electrically connecting a plurality of capacitors 310 in the capacitor assembly 300 in a parallel or serial manner, and for connecting the capacitor assembly 300 to the circuit board 100. Compared with the prior art in which the plurality of capacitors are welded to the circuit board one by one, the connection between an individual electrically conductive connecting element 1000 and the circuit board 100 is simpler in the present disclosure. This may effectively ameliorate the issue of circuit board damage caused by improper operations while reducing the assembly complexity, such that even if the electrically conductive connecting element 1000 is damaged, its replacement or repair cost will be far lower than the cost of the circuit board. Generally, to impart a certain strength and plasticity to the electrically conductive connecting element 1000, a sheet or bar-shaped metal body is selected, e.g., a copper sheet, a copper alloy sheet, etc. Of course, the present disclosure is not limited to the metal electrically conductive bodies above. The electrically conductive connecting element 1000 may also be formed by a non-electrically-conductive substrate attached to an electrically conductive layer. E.g., the non-electrically-conductive substrate is attached with an electrically conductive silver paste, an electrically conductive printing ink, etc. Fig. 3 shows a first electrically conductive element 400 and a second electrically conductive element 500 of the electrically conductive connecting element 1000.

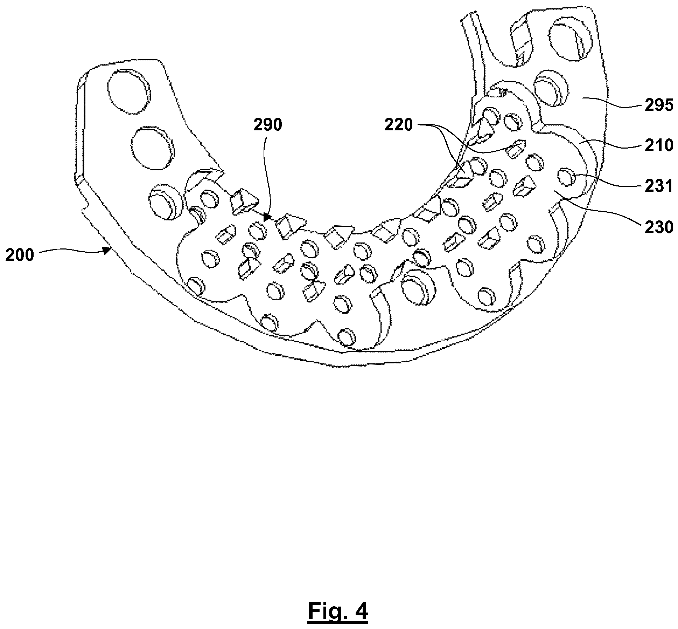

Referring to **Figs. 4-7****,** to secure the capacitors 310 more effectively, the motor control module 120 in this embodiment further comprises a capacitor holder 200, the capacitor holder 200 being provided thereon with at least one capacitor positioning portion 290 via which the capacitors 300 are at least partially positioned on and/or accommodated by the capacitor holder 200. Pins 312 of the capacitors 310 are electrically connected to the electrically conductive connecting element 1000. By positioning the plurality of capacitors 310 on the capacitor holder 200, the stationarity of the capacitors 310 is enhanced and jitter of the capacitors 310 is reduced, which facilitates maintaining connection reliability between the capacitors 310 and the electrically conductive connecting element 1000 and avoids occurrence of issues such as breakage of pins and falloff of the capacitors 310 due to jitter of the capacitors 310.

According to an embodiment of the present invention, the capacitance positioning portion 290 comprises a positioning groove 210 recessed in a surface 295 of the capacitor holder 200 and a plurality of positioning studs 220 dispersedly arranged in the positioning groove 210. The plurality of positioning studs 220 partition the positioning groove 210 into a plurality of accommodating zones 230. Bodies 311 of the capacitors are entirely or partially inserted in the accommodating zones 230.

For one embodiment a positioning groove 210 is provided on the surface 295 of the capacitor holder 200 according to an arrangement pattern of the capacitor assembly 300, and a plurality of positioning studs 220 are dispersedly arranged in the positioning groove 210. The plurality of positioning studs 220 is distributed substantially according to a circular track, thereby forming an accommodating zone 230 that may match a cylindrical capacitor. By inserting the body end of the cylindrical capacitor 300 into the accommodating zone 230, the body of the cylindrical capacitor 310 will be tightly clamped by the positioning studs 220. This positioning manner may collectively position the plurality of capacitors 310 on the capacitor holder 200, such that the capacitors 310 will be arranged compactly, thereby saving space.

In another embodiment, the capacitor positioning portion 290 may comprise a plurality of positioning grooves 210 that are recessed in the surface of the capacitor holder 200 and spaced from one another, the bodies of the capacitors 310 being inserted into the positioning grooves 210.

In a further embodiment, the capacitor positioning portion 290 may comprise positioning holes through the capacitor holder 200, bodies of the capacitors 310 being through-fitted in the positioning holes.

When the capacitor holder 200 is provided, the capacitor assembly 300 may be mounted at a side of the capacitor holder 200 facing away from the circuit board 100, and the electrically conductive connecting element 1000 may be mounted at a side of the capacitor holder 200 facing the circuit board 100. In this way, the electrically conductive connecting element 1000 and the capacitor assembly 300 may be both effectively fixed, such that even if vibrations occur when the motor is working, the electrically conductive connecting element 1000 and the capacitors 310 are still stationary relative to each other, which may well maintain electrical connection reliability between the capacitors 310 and the electrically conductive connecting element 1000. Additionally, the capacitor assembly 300 is mounted at a side of the capacitor holder 200 facing away from the circuit board 100, and the capacitor assembly 300 and the circuit board 100 are spaced or separated by the capacitor holder 200, which may reduce the heat transferred from the capacitor assembly 300 to the circuit board 100. According to the embodiment above, each accommodating zone 230 of the capacitor holder 200 is provided with vias 231 through which pins 312 of the capacitors are electrically connected to the electrically conductive connecting element 1000 below, e.g., by welding. In another embodiment, the electrically conductive connecting element portion may be bent through the via holes and welded to the pins of the capacitors.

Referring to Figs. 3-6, according to an embodiment of the present invention, the electrically conductive connecting element 1000 comprises a first electrically conductive element 400 and the second electrically conductive element 500, the first electrically conductive element 400 and the second electrically conductive element 500 being preferably provided as a bar or sheet shape so as to facilitate machining and assembling. A side of the capacitor holder 200 facing the circuit board 100 has a hot-pressing column 240 for melted connection. Connection holes 440, 540 are provided on the first electrically conductive element 400 and the second electrically conductive element 500. The first electrically conductive element 400 and the second electrically conductive element 500 abut against a back face of the capacitor holder 200. A portion of the hot-pressing column 240 extending through the connection holes 440, 540 is treated by thermally riveting, such that it presses and secures the first electrically conductive element 400 and the second electrically conductive element 500.

The capacitor holder 200 according to the present embodiment includes (but is not limited to) a plastic holder and a foamed holder. An insolating rib 250 is provided at a side of the capacitor holder 200 facing the circuit board 100: The first electrically conductive element 400 and the second electrically conductive element 500 are spaced by the insolating rib 250 to implement insulation, thereby ensuring electric safety.

In another embodiment, a plurality of elastic snap-joints are provided along extending directions of the first electrically conductive element 400 and the second electrically conductive element 500, the first electrically conductive element 400 and the second electrically conductive element 500 being secured on the capacitor holder 200 through the elastic snap-joints.

In a further embodiment, the first electrically conductive element 400 and the second electrically conductive element 500 are secured on the capacitor holder 200 by welding.

In another embodiment, the first electrically conductive element 400 and the second electrically conductive element 500 are secured on the capacitor holder 200 through at least one screw connection.

In another embodiment, two inlaid grooves matching the first electrically conductive element 400 and the second electrically conductive element 500 are provided on the capacitor holder 200, wherein the first electrically conductive element 400 and the second electrically conductive element 500 are press-fit into the corresponding inlaid grooves by interference-fitting.

According to an embodiment of the present invention, a plurality of capacitors 310 in the capacitor assembly 300 are arranged in a sector shape to form a sector-shaped capacitor assembly 300.

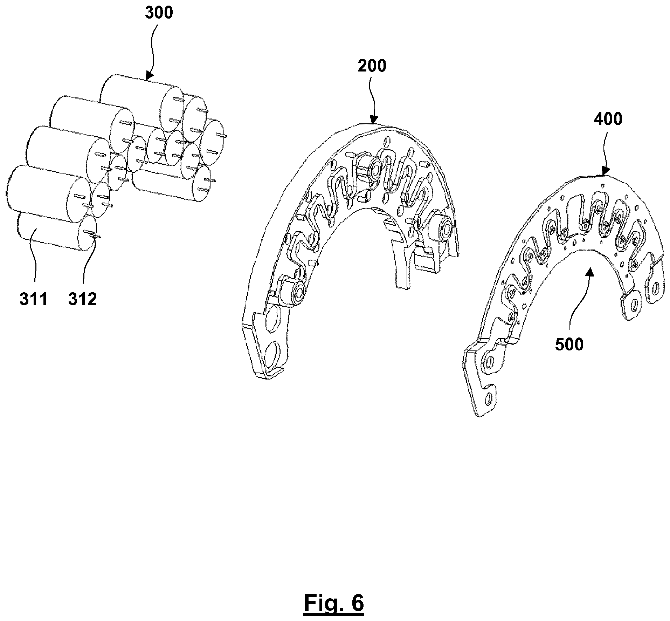

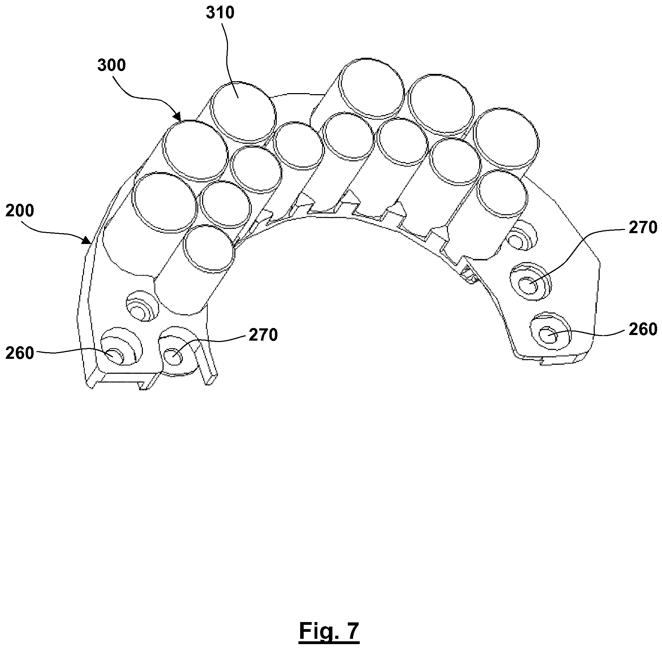

**Fig.** 7 shows an example wherein the capacitor assembly 300 comprises two rows of capacitors, each row of the capacitors being arranged in a sector shape, and the two rows of capacitors are staggered and abut each other in the arrangement direction, i.e., the gap between two adjacent capacitors 310 in a same row of capacitors is utilized to accommodate the corresponding capacitors 310 in the other row of capacitors, such that the arrangement of the plurality of capacitors 310 is more compact, which reduces the space occupied by the capacitor assembly 300. With reference to Figs. 3 and 6, to fit the plurality of capacitors 310 arranged in the sector shape, the first electrically conductive element 400 and the second electrically conductive element 500 are designed into an arc shape. The first electrically conductive element 400 has a first pin connecting portion in comb-shaped distribution, and the second electrically conductive sheet 500 has a second pin connecting portion 420 in comb-shaped distribution. One pin of the capacitor 310 is electrically connected to the first pin connecting portion 420, the other pin thereof being electrically connected to the second pin connecting portion 520. The first pin connecting portion 420 and the second pin connecting portion 520 are interlaced with each other. By accommodating the pin connecting portions with the gaps formed by the comb-shaped configurations, the first electrically conductive element 400 and the second electrically conductive element 500 may be disposed in juxtaposition more compactly, thereby saving space. In the case of three, four or more rows of capacitors being provided, a capacitor assembly 300 may also be formed with reference to the scheme above.

In another embodiment, a plurality of capacitors 310 in the capacitor assembly 300 are arranged circumferentially, thereby forming an annular capacitor assembly 300; or, a plurality of capacitors 310 are linearly arranged to form a rectangular capacitor assembly 300; likewise, these annular capacitor assembly 300 or rectangular capacitor assembly 300 may include at least two rows of capacitors 310. Based on different arrangement patterns of the capacitors, the number and shape of the electrically conductive connecting elements 400, 500 may be adapted. It needs to be noted that the electrically conductive connecting element 1000 serves for electrically interconnecting the plurality of capacitors 300, which is not limited to the parallel connection of the plurality of capacitors as described in this embodiment. Instead, it may be the case that each row of capacitors 310 is individually serially connected by one electrically conductive connecting element 400, 500 , such that each row of capacitors 310 implements its functions relatively independently.

Now, it may be understood that the present invention adopts an electrically conductive connecting element 1000 as a connection medium between the capacitor assembly 300 and the circuit board 100. The distribution manner of the capacitors 310 and the numbers for distribution are not limited to the structural design of the circuit board 100 per se. As long as the capacitor assembly 300 may be connected to the circuit board 100, the capacitor assembly 300 may be arranged into an annular capacitor assembly, a sector-shaped capacitor assembly, a rectangular capacitor assembly, or a random distribution.

According to the embodiment above, the first electrically conductive element 400 comprises a first body portion 410 and first connection terminals 430 disposed at two ends of the first body portion 410. First connection points are provided on the circuit board 100, the first connection terminals 430 being fixed on the connection points, e.g., by screw connection, by melting, etc. At least one first bent portion is provided between the first body portion 410 and the first connection terminal 430 so as to be able to machine the first electrically conductive element 400 into a desired shape, e.g., as shown in Fig. 3. In this embodiment, a first bent portion 450 is provided between the first body portion 410 and the first connection terminals 430. The first bend portion 450 extends towards the circuit board 100 direction such that the first body portion 410 is closer to the circuit board 100 than the first connection terminals 430 are. Such a first electrically conductive element 400 may be well fitted to the back face of the capacitor holder 200, which thus may enhance the bend-resistance anti-deformation capability of the first electrically conductive element 400. It should be understood that the first connection terminals 430 may also be provided at any other position than the two ends of the first body portion 410.

According to the embodiment above, the second electrically conductive element 500 comprises a second body portion 510 and second connection terminals 530 disposed at two ends of the second body portion 510. Second connection points are provided on the circuit board 100. The second connection terminals 530 are fixed on the connection points, e.g., by screw connection, by melting, etc. At least one second bent portion is provided between the second body portion 510 and the second connection terminals 530 so as to be able to machine the second electrically conductive element 500 into a desired shape, e.g., as shown in Fig. 3. In this embodiment, a second bent portion 550 is provided between the second body portion 510 and the second connection terminals 530. The second bent portion 550 extends towards the circuit board 100 direction such that the second body portion 510 is closer to the circuit board 100 than the second connection terminals 530 are. Such a second electrically conductive element 500 may be well fitted to the back face of the capacitor holder 200, which thus may enhance the bend-resistance anti-deformation capability of the second electrically conductive element 500. It should be understood that the second connection terminals may also be provided at any other position than the two ends of the second body portion.

According to the above embodiment of the present invention, the capacitor holder 200 is securely connected to the circuit board 100. With reference to Figs. 1, 3, and 7, a portion of the capacitor holder 200 corresponding to the first connection terminal 430 is provided with a first mount hole 260. A screw extends through the first mount hole 260 and the first connection terminal 430 to be tightly locked at the first connection point on the circuit board 100, such that the capacitor holder 200 and the first connection terminal 430 are securely connected to the circuit board 100. A portion of the capacitor holder 200 corresponding to the second connection terminal 530 is provided with a second mount hole 270. A screw extends through the second mount hole 270 and the second connection terminal 530 to be tightly locked at the second connection point on the circuit board 100, such that the capacitor holder 200 and the second connection terminal 530 are securely connected to the circuit board 100.

To sufficiently utilize the capacitor holder 200 and meanwhile save space of the circuit board 100, besides the capacitors 310, electronic elements such as an inductor, a resistor and a cable may also be positioned on the capacitor holder.

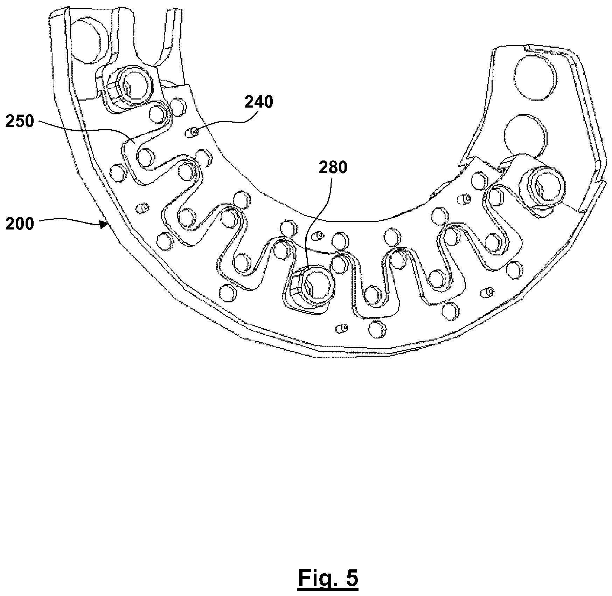

With reference to Fig. 5, at least one support portion 280 preferably extending towards the circuit board direction is provided at the back face of the capacitor holder 200. After the capacitor holder 200 is mounted to the circuit board 100, an end of the support portion 280 abuts the circuit board surface 100. The "abut" here may refer to the end of the support portion 280 contacting the circuit board surface or a very small gap being formed between the end of the support portion 280 and the circuit board surface 100. The provision of the support portion 280 may play a role of supporting the capacitor holder 200, thereby avoiding the capacitor holder 200 from collapsing towards the circuit board 100, which would otherwise cause contact of the capacitors 310 with the circuit board 100 or the electronic elements on the circuit board 100. In this way, the weight bearing capability of the capacitor holder 200 increases, such that more capacitors 310 and other electronic elements than the capacitors 310 may be mounted on the capacitor holder 200. Particularly, when more electronic elements such as the inductor, the resistor and the cable are mounted on the capacitor holder 200, the capacitors 310 and other electronic elements may be borne more stably.

### Embodiment II

Embodiment II is different from Embodiment I in that in Embodiment II, the capacitor holder comprises a first holder and a second holder that are separately formed, wherein two ends of bodies of the capacitors are positioned on the first holder and the second holder, respectively. Structural designs of the first holder and the second holder may refer to the capacitor holder described in Embodiment I. The capacitors are positioned according to the solution described in Embodiment I. Because the upper and lower ends of the capacitors are both fixed by the holders, capacitor jitter may be better prevented. Preferably the first holder and the second holder are securely connected with each other, e.g., by screw connection, so as to hold and secure the capacitor assembly therebetween, which may prevent detachment of the first holder from the second holder, such that the capacitor holder's positioning of the capacitors is more stable.

It may be contemplated based on Embodiment I and Embodiment II that by positioning first ends of bodies of the capacitors away from their pins on the capacitor holder, electrically connecting the pins of the capacitors to the electrically conductive connecting element, and detaching the capacitor holder from the electrically conductive connecting element, positioning of a plurality of capacitors may be likewise implemented.

Besides using the capacitor holder, the present invention may also adopt the following manners to position a plurality of capacitors: encapsulating the plurality of capacitors inside a housing to form a capacitor assembly; pins of the capacitors extending out of the housing to connect the electrically conductive connecting element; or, the plurality of capacitors are adhesively connected to form the capacitor assembly.

### Embodiment III

Embodiment III is different from Embodiment I in that in Embodiment III the motor control module 120 further comprises an extended connecting element 1100 via which the electrically conductive connecting element 1000 and the circuit board 100 are electrically connected. The extended connecting element 1100 not only acts as an extended portion of the electrically conductive connecting element 1000, such that the electrically conductive connecting element 1000 may be electrically connected to a connection point that is relatively distant from the capacitor assembly 300 on the circuit board 100, but also may supply the electric energy of the capacitor assembly 300 to other electronic elements or circuits on the circuit board 100, respectively, to satisfy the power supply needs of the other elements and circuits on the circuit board 100. For example, the capacitor assembly 300 and the electrically conductive connecting element 1000 are disposed at a certain specific area of the circuit board 100. By an extended connecting element 1100 with a matched appropriate length and profile, the electrical connection between the electrically conductive connecting element 1000 and other electronic elements and circuits in another area of the circuit board 100 is implemented.

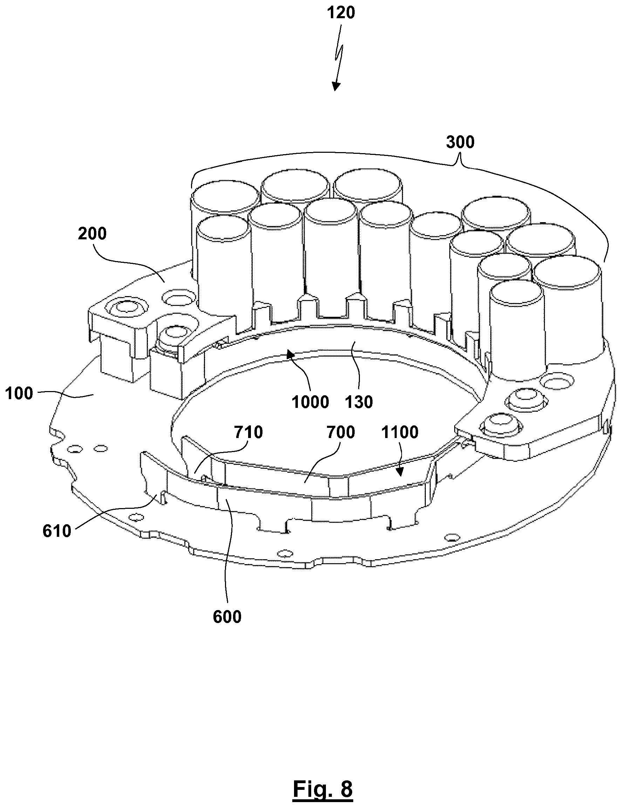

Referring to **Fig. 8****,** according to an embodiment of the present invention, the electrically conductive connecting element 1000 comprises a first electrically conductive element 400 and a second electrically conductive element 500. Correspondingly, the extended connecting element 1100 comprises a first extended connecting element 600 and a second extended connecting element 700, both of the first extended connecting element 600 and the second extended connecting element 700 being a sheet or bar-shaped metal body. The first extended connecting element 600 and the first connection terminal of the first electrically conductive element 400 are jointly connected to the first connection point on the circuit board 100, and the second extending connecting element 700 and the second connection terminal on the second electrically conductive element 500 are jointly connected on the second connection point on the circuit board 100. To satisfy power supply needs of the plurality of electronic elements or the circuits on the circuit board 100, at least one first contact 610 may extend out on the first extended connecting element 600, the first contact 610 being embedded in the circuit board 100. At least one second contact 710 may extend out on the second extended connecting element 700, the second contact 710 being embedded in the circuit board 100.

According to the above embodiment, the circuit board 100 has a control circuit and a power supply circuit. The control circuit and the power supply circuit are electrically connected via the first electrically conductive element 400 and the second electrically conductive element 500 (the first extended connecting element 600 and the second extended connecting element 700 may also be adopted as extended portions of the first electrically conductive element 400 and the second electrically conductive element 500) such that the power supply circuit may supply power to the control circuit.

It should be understood that the present invention does not limit the number of circuit boards 100. When it is needed to arrange a plurality of circuit boards 100, the first electrically conductive element 400 and the second electrically conductive element 500 may also implement electrical connection between a plurality of circuit boards 100. For example, in another embodiment, the circuit boards include a control circuit board and a power supply circuit which are separately provided. The first electrically conductive element 400 and the second electrically conductive element 500 are electrically connected at one of the control circuit board and the power supply circuit board, and electrically connected to the other circuit board via the extended connecting element 1100, such that the power supply circuit board may supply power to the control circuit board; or the control circuit board and the power supply circuit board are directly electrically connected via the first electrically conductive element 400 and the second electrically conductive element 500.

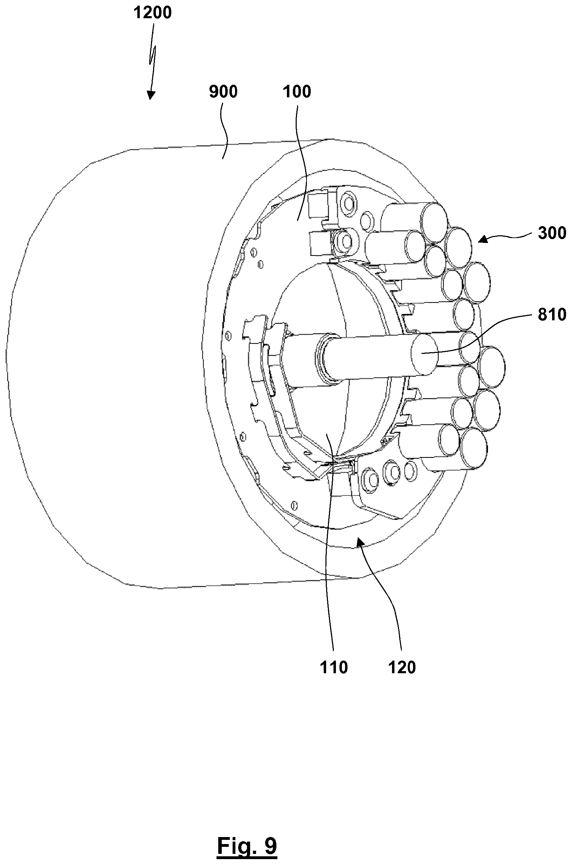

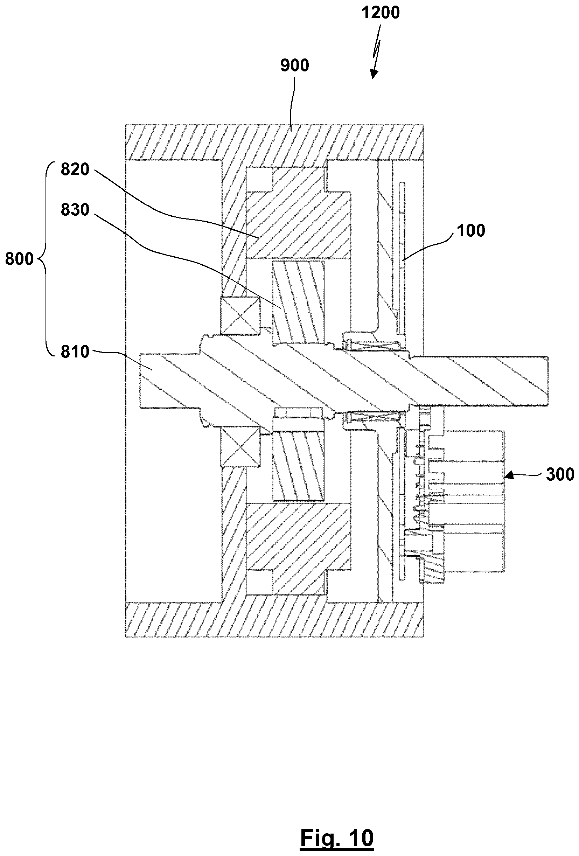

With reference to **Figs. 9** **and** **10****,** the present invention provides an actuator 1200, comprising an electric motor 800 and the motor control module 120 according to any of the technical solutions above. The actuator 1200 generally further comprises a housing 900 in which the electric motor 800 and the motor control module 120 are accommodated. The motor control module 120 according to the present invention may adopt a smaller-sized circuit board, such that the electric motor 800 and the motor control module 120 may be accommodated in the same housing of the actuator 1200, which enhances the integration degree and compactness of the actuator 1200 and facilitates disassembly and maintenance.

According to an embodiment of the present invention, the electric motor 800 comprises a stator portion 820, a rotor portion 830 matching the stator portion 820 and an output shaft 810 linked with the stator portion 820. The stator portion 820, the rotor portion 830 and the output shaft 810 are accommodated in a cylindrical housing 900. The motor control module 120 is disposed at a tail portion of the housing 900. To make the electric motor better matched to the housing 900, the circuit board 100 is designed into an annular shape. A through-hole 110 surrounding the output shaft 810 is formed on the circuit board 100. The capacitor assembly 300 is arranged into a sector shape along a peripheral direction of the circuit board 100 so as to allow the tail end of the output shaft 810 to extend through the circuit board 100 and the capacitor assembly 300; or the tail end of the output shaft 810 only extends through the circuit board 100, not through the capacitor assembly 300. It should be understood that this motor control module 120 is not limited to being mounted at the tail portion of the housing. According to design requirements of the actuator 1200, this motor control module 120 may also be mounted at a front portion or other area of the housing. Besides the annular circuit board, a disc-shaped circuit board may also be used. At this point, a tail end of the output shaft may only pass through the capacitor assembly. Of course, other shapes of circuit boards such as square, rectangular, oval, etc. are also included in the present invention.

The present invention provides an electromechanical brake apparatus, comprising the actuator 1200 according to any of the technical solutions above and a brake directly or indirectly driven by the actuator 1200. According to an embodiment of the present invention, the brake is a disc brake. The electromechanical brake apparatus further comprises a transmission unit through which the actuator drives the brake to act, wherein the transmission unit may be a gear reducer, a planetary gear reducer, a worm gear reducer, cycloidal gear, etc., which, with a reasonably designed reduction ratio, e.g. reduces rotational speed and increases torque. It should be understood that besides the disc brake, the present invention is also applicable for a drum brake.

### LIST OF REFERENCE NUMERALS

- 100: circuit board
- 110: through-hole
- 120: motor control module
- 130: gap
- 200: capacitor holder
- 210: positioning groove
- 220: positioning stud
- 230: accommodating zone
- 231: via
- 240: hot pressing column
- 250: insolating rib
- 260: first mount hole
- 270: second mount hole
- 280: support portion
- 290: capacity positioning portion
- 295: surface
- 300: capacitor assembly
- 310: capacitor
- 311: body of capacitor
- 322: pin of capacitor
- 400: first electrically conductive element
- 410: first body portion
- 420: first pin connecting portion
- 430: first connection terminal
- 440: connecting hole
- 450: first bent portion
- 500: second electrically conductive element
- 510: second body portion
- 520: second pin connecting portion
- 530: second connection terminal
- 540: connecting hole
- 550: second bent portion
- 600: first extended connecting element
- 610: first contact
- 700: second extended connecting element
- 710: second contact
- 800: electric motor
- 810: output shaft
- 820: stator portion
- 830: rotor portion
- 900: housing
- 1000: electrically conductive element
- 1100: extended connecting element
- 1200: actuator

## Claims

1. A motor control module (120) for a vehicle brake system, comprising:
a circuit board (100); and
a capacitor assembly (300) including a plurality of capacitors (310); and
an electrically conductive connecting element (1000) for electrically connecting the plurality of capacitors (310), the electrically conductive connecting element (1000) being electrically connected to the circuit board (100),
**characterized in that** the electrically conductive connecting element (1000) is disposed in a suspended state relative to the circuit board (100), such that a gap (130) is maintained between the capacitor assembly (300) and the circuit board (100), the motor control module (120) further comprises a capacitor holder (200) on which the plurality of capacitors (310) are positioned to form the capacitor assembly (300) and the capacitor assembly (300) is mounted at a side of the capacitor holder (200) facing away from the circuit board (100), and the electrically conductive connecting element (1000) is mounted at a side of the capacitor holder (200) facing the circuit board (100).

2. The motor control module (120) according to claim 1, **wherein** the capacitor holder (200) is provided with a capacitor positioning portion (290) via which the capacitors (310) are at least partially positioned on the capacitor holder (200), pins of the capacitors (310) being electrically connected to the electrically conductive connecting element (1000).

3. The motor control module (120) according to claim 2, **wherein** the capacitor positioning portion (290) comprises a positioning groove (210) recessed in a surface (295) of the capacitor holder (200) and a plurality of positioning studs (220) dispersedly arranged in the positioning groove (210), the plurality of positioning studs (220) partitioning the positioning groove (210) into a plurality of accommodating zones (230), bodies of the capacitors (310) being entirely or partially inserted in the accommodating zones (230) or
the capacitor positioning portion (290) comprises a plurality of positioning grooves (210) that are recessed in the surface (295) of the capacitor holder (200) and spaced from one another, the bodies of the capacitors (310) being entirely or partially inserted into the positioning groove (210) or
the capacitor positioning portion (290) comprises positioning holes through the capacitor holder (200), bodies of the capacitors (310) being through-fitted in the positioning holes.

4. The motor control module (120) according to claim 1, **wherein** vias (231) are provided on the capacitor holder (200), the pins (312) of the capacitors (310) being inserted or passed through the vias (231) to be electrically connected with the electrically conductive connecting element (1000).

5. The motor control module (120) according to claim 4, **wherein** the electrically conductive connecting element (1000) is fitted to the capacitor holder (200) by at least one of a snap-fit, a screw connection, welding, melting and a press-fit.

6. The motor control module (120) according to claim 1, **wherein** the electrically conductive connecting element (1000) comprises a first electrically conductive element (400) and a second electrically conductive element (500) and the capacitor holder (200) has an insolating rib (250) that insolates and insulates the first electrically conductive element (400) from the second electrically conductive element (500).

7. The motor control module (120) according to claim 1, **wherein** the capacitor holder (200) has at least one support portion (280) extending towards the circuit board direction.

8. The motor control module (120) according to claim 1, **wherein** the motor control module (120) further comprises an electronic element positioned on the capacitor holder (200).

9. The motor control module (120) according to claim 1, **wherein** the plurality of capacitors (310) are adhesively attached to form the capacitor assembly (300).

10. The motor control module (120) according to claim 1, **wherein** the electrically conductive connecting element (1000) comprises a first electrically conductive element (400) and a second electrically conductive element (500), wherein first pins of the capacitors (310) are electrically connected to the first electrically conductive element (400), and second pins thereof are connected to the second electrically conductive element (500) to cause the capacitor assembly (300) to be connected to the circuit board (100).

11. The motor control module (120) according to claim 10, **wherein** the first electrically conductive element (400) has a first pin connecting portion (420) in comb-shaped distribution, and the second electrically conductive element (500) has a second pin connecting portion (520) in a comb-shaped distribution, the first pin connecting portion (420) and the second pin connecting portion (520) being interlaced with each other.

12. The motor control module (120) according to any one of claims 1-11, **wherein** the plurality of capacitors (310) are arranged circumferentially to form an annular capacitor assembly (300)
or the plurality of capacitors (310) are arranged in a sector shape to form a sector-shaped capacitor assembly (300)
or the plurality of capacitors (310) are arranged linearly to form a rectangular capacitor assembly (300).

13. The motor control module (120) according to claim 12, **wherein** the plurality of capacitors (310) are at least arranged in two rows, wherein two adjacent rows of capacitors (310) are staggered in abutment with each other in an arrangement direction.

14. The motor control module (120) according to any one of claims 1-13, **wherein** the capacitors (310) lie flatly or vertically relative to the electrically conductive connecting element (1000).

15. The motor control module (120) according to any one of claims 1-13, **wherein** the electrically conductive connecting element (1000) comprises a body portion for electrically connecting the capacitor assembly (300) and a connection terminal disposed on the body portion, the circuit board (100) being provided with a connection point on which the connection terminal is secured.

16. The motor control module (120) according to any one of claims 1-13, **wherein** the circuit board (100) is provided with a control circuit and a power supply circuit
or the circuit board (100) comprises a control circuit board and a power supply circuit board that are separately provided, the electrically conductive connecting element (1000) electrically connecting the control circuit board and/or the power supply circuit board.

17. An actuator (1200) comprising an electric motor (800) and the motor control module (120) according to any one of claims 1-16.

18. The actuator (1200) according to claim 17, **wherein** the actuator (1200) further comprises a housing (900) within which the electric motor (800) and the motor control module (120) are accommodated, an output shaft (810) of the electric motor (800) extending through the circuit board (100) and/or the capacitor assembly (300).

19. An electromechanical brake apparatus, comprising the actuator (1200) according to any one of claims 17-18 and a brake directly or indirectly driven by the actuator (1200).

## Patentansprüche

1. Motor-Steuer- oder -Regelmodul (120) für ein Fahrzeugbremssystem, welches aufweist:
eine Platine (100); und
eine Kondensator-Baugruppe (300) mit einer Vielzahl von Kondensatoren (310); und
einem elektrisch leitfähigen Verbindungselement (1000) zum elektrischen Verbinden der Vielzahl der Kondensatoren (310), wobei das elektrisch leitfähige Verbindungselement (1000) elektrisch mit der Platine (100) verbunden ist,
**dadurch gekennzeichnet, dass** das elektrisch leitfähige Verbindungselement (1000) so in einem Schwebezustand relativ zu der Platine (100) angeordnet ist, dass eine Lücke (130) zwischen der Kondensator-Baugruppe (300) und der Platine (100) aufrechterhalten wird, das Motor-Steuer- oder-Regelmodul (120) des Weiteren einen Kondensatorhalter (200) aufweist, auf oder an welchem die Vielzahl von Kondensatoren (310) positioniert oder angeordnet sind, um die Kondensator-Baugruppe (300) zu bilden, und die Kondensator-Baugruppe (300) auf oder an einer Seite des Kondensatorhalters (200) befestigt ist, die der Platine (100) abgewandt ist, und das elektrisch leitfähige Verbindungselement (1000) ist auf oder an einer Seite des Kondensatorhalters (200) befestigt, die der Platine (100) zugewandt ist.

2. Motor-Steuer- oder -Regelmodul (120) nach Anspruch 1, **wobei** der Kondensatorhalter (200) mit einem Kondensator-Positionierungsabschnitt (290) ausgestattet ist, mit welchem die Kondensatoren (310) zumindest teilweise auf oder an dem Kondensatorhalter (200) positioniert sind, wobei Anschlüsse der Kondensatoren (310) elektrisch mit dem elektrisch leitfähigen Verbindungselement (1000) verbunden sind.

3. Motor-Steuer- oder -Regelmodul (120) nach Anspruch 2, **wobei** der Kondensator-Positionierungsabschnitt (290) eine Positionierungsnut oder -vertiefung (210) aufweist, welche in eine Oberfläche (295) des Kondensatorhalters (200) eingelassen ist, und eine Vielzahl von Positionierungsbolzen (220) verstreut in der Positionierungsnut oder -vertiefung (210) angeordnet sind, wobei die Vielzahl von Positionierungsbolzen (220) die Positionierungsnut oder -vertiefung (210) in eine Vielzahl von aufnehmenden Zonen (230) aufteilt und Körper der Kondensatoren (310) vollständig oder teilweise in die aufnehmenden Zonen (230) eingesetzt sind, oder
der Kondensator-Positionierungsabschnitt (290) eine Vielzahl von Positionierungsnuten oder -vertiefungen (210) aufweist, die in die Oberfläche (295) des Kondensatorhalters (200) eingelassen und voneinander beabstandet sind, wobei die Körper der Kondensatoren (310) ganz oder teilweise in die Positionierungsnuten oder -vertiefungen (210) eingesetzt sind, oder
der Kondensator-Positionierungsabschnitt (290) Positionierungsausnehmungen durch den Kondensatorhalter (200) aufweist und Körper der Kondensatoren (310) in den Positionierungsbohrungen eingepasst oder durch diese hindurchgepasst sind.

4. Motor-Steuer- oder -Regelmodul (120) nach Anspruch 1, **wobei** Durchkontaktierungen, Kontaktlöcher oder Bohrungen (231) auf oder an dem Kondensatorhalter (200) vorgesehen sind, die Anschlüsse (312) der Kondensatoren (310) in die Durchkontaktierungen, Kontaktlöcher oder Bohrungen (231) eingesetzt oder durch diese durchgeführt sind für eine elektrische Verbindung mit dem elektrisch leitfähigen Verbindungselement (1000).

5. Motor-Steuer- oder -Regelmodul (120) nach Anspruch 4, **wobei** das elektrisch leitfähige Verbindungselement (1000) durch mindestens eine Rast- oder Schnappverbindung, eine Schraubverbindung, einer Verschweißung, Verschmelzung oder eine Pressverbindung oder - passung an dem Kondensator (200) befestigt ist.

6. Motor-Steuer- oder -Regelmodul (120) nach Anspruch 1, **wobei** das elektrisch leitfähige Verbindungselement (1000) ein erstes elektrisch leitfähiges Element (400) und ein zweites elektrisch leitfähiges Element (500) aufweist und der Kondensatorhalter (200) eine Isolationsrippe (250) aufweist, welche isoliert und das erste elektrisch leitfähige Element (400) von dem zweiten elektrisch leitfähigen Element (500) isoliert.

7. Motor-Steuer- oder -Regelmodul (120) nach Anspruch 1, **wobei** der Kondensatorhalter (200) mindestens einen Stützabschnitt (280) aufweist, welcher sich zu der Platinenrichtung erstreckt.

8. Motor-Steuer- oder -Regelmodul (120) nach Anspruch 1, **wobei** das Motor-Steuer- oder - Regelmodul (120) ein elektronisches Element aufweist, welches auf oder an dem Kondensatorhalter (200) angeordnet ist.

9. Motor-Steuer- oder -Regelmodul (120) nach Anspruch 1, **wobei** zur Bildung der Kondensator-Baugruppe (300) die Vielzahl an Kondensatoren (310) haftend oder klebend befestigt sind.

10. Motor-Steuer- oder -Regelmodul (120) nach Anspruch 1, **wobei** das elektrisch leitfähige Verbindungselement (1000) ein erstes elektrisch leitfähiges Element (400) und ein zweites elektrisch leitfähiges Element (500) aufweist, wobei erste Anschlüsse der Kondensatoren (310) elektrisch mit dem ersten elektrisch leitfähigen Element (400) verbunden sind, und zweite Anschlüsse von diesem mit dem zweiten elektrisch leitfähigen Element (500) verbunden sind, um zu bewirken, dass die Kondensator-Baugruppe (300) mit der Platine (100) verbunden ist.

11. Motor-Steuer- oder -Regelmodul (120) nach Anspruch 10, **wobei** das erste elektrisch leitfähige Element (400) einen ersten Anschluss-Verbindungsabschnitt (420) in einer kammförmigen Aufteilung und das zweite elektrisch leitfähige Element (500) einen zweiten Anschluss-Verbindungsabschnitt (520) in einer kammförmigen Aufteilung aufweist, wobei der erste Anschluss-Verbindungsabschnitt (420) und der zweite Anschluss-Verbindungsabschnitt (520) miteinander verschränkt sind.

12. Motor-Steuer- oder -Regelmodul (120) nach einem der Ansprüche 1 bis 11, **wobei** die Vielzahl von Kondensatoren (310) zur Bildung einer ringförmigen Kondensator-Baugruppe (300) entlang eines Umfangs angeordnet sind,
oder die Vielzahl von Kondensatoren (310) in einer Sektorform angeordnet sind, um eine sektorförmige Kondensator-Baugruppe (300) zu bilden,
oder die Vielzahl der Kondensatoren (310) linear angeordnet sind, um eine rechteckige Kondensator-Baugruppe (300) zu bilden.

13. Motor-Steuer- oder -Regelmodul (120) nach Anspruch 12, **wobei** die Vielzahl von Kondensatoren (310) mindestens in zwei Reihen angeordnet sind, wobei zwei benachbarte Reihen von Kondensatoren (310) in eine Anordnungsrichtung versetzt, gestaffelt oder gestuft und aneinander angrenzend angeordnet sind.

14. Motor-Steuer- oder -Regelmodul (120) nach einem der Ansprüche 1 bis 13, **wobei** die Kondensatoren (310) flach liegen oder vertikal zu dem elektrisch leitfähigen Verbindungselement (1000) angeordnet sind oder liegen.

15. Motor-Steuer- oder -Regelmodul (120) nach einem der Ansprüche 1 bis 13, **wobei** das elektrisch leitfähige Verbindungselement (1000) zum elektrischen Verbinden der Kondensator-Baugruppe (300) einen Körperabschnitt aufweist und ein Verbindungsterminal aufweist, welches auf oder an dem Körperabschnitt angeordnet ist, wobei die Platine (100) mit einem Verbindungspunkt ausgestattet ist, auf oder an welchem das Verbindungsterminal befestigt ist.

16. Motor-Steuer- oder -Regelmodul (120) nach einem der Ansprüche 1 bis 13, **wobei** die Platine (100) mit einem Steuer- oder Regelkreis und einem Leistungsversorgungskreis ausgestattet ist,
oder die Platine (100) eine Steuerkreis- oder Regelkreis-Platine und eine Leistungsversorgungs-Platine aufweist, welche einzeln bereitgestellt sind, wobei das elektrisch leitfähige Verbindungselement (1000) die Steuerkreis- oder Regelkreis-Platine und/oder die Leistungsversorgungs-Platine elektrisch verbindet.

17. Aktuator (1200), welcher einen elektrischen Motor (800) und das Motor-Steuer- oder - Regelmodul (120) nach einem der Ansprüche 1 bis 16 aufweist.

18. Aktuator (1200) nach Anspruch 17, wobei der Aktuator (1200) des Weiteren ein Gehäuse (900) aufweist, in welchem der elektrische Motor (800) und das Motor-Steuer- oder -Regelmodul (120) aufgenommen werden, wobei sich eine Ausgangswelle (810) des elektrischen Motors (800) durch die Platine (100) und/oder die Kondensator-Baugruppe (300) erstreckt.

19. Elektromechanische Bremseinrichtung mit dem Aktuator (1200) nach einem der Ansprüche 17 bis 18 und einer Bremse, die direkt oder indirekt durch den Aktuator (1200) angetrieben wird.

## Revendications

1. Module de commande de moteur (120) pour un système de frein de véhicule, comprenant :
une carte de circuit imprimé (100) ; et
un ensemble de condensateurs (300) comprenant une pluralité de condensateurs (310) ; et
un élément de raccordement électriquement conducteur (1000) pour raccorder, électriquement, la pluralité de condensateurs (310), l'élément de raccordement électriquement conducteur (1000) étant électriquement raccordé à la carte de circuit imprimé (100),
**caractérisé en ce que** l'élément de raccordement électriquement conducteur (1000) est disposé dans un état suspendu par rapport à la carte de circuit imprimé (100), de sorte qu'un interstice (130) est maintenu entre l'ensemble de condensateurs (300) et la carte de circuit imprimé (100), le module de commande de moteur (120) comprend en outre un support de condensateur (200) sur lequel la pluralité de condensateurs (310) est positionnée afin de former l'ensemble de condensateurs (300) et l'ensemble de condensateurs (300) est monté sur un côté du support de condensateur (200) orienté à l'opposé de la carte de circuit imprimé (100), et l'élément de raccordement électriquement conducteur (1000) est monté sur un côté du support de condensateur (200) faisant face à la carte de circuit imprimé (100).

2. Module de commande de moteur (120) selon la revendication 1, dans lequel le support de condensateur (200) est prévu avec une partie de positionnement de condensateur (290), via laquelle les condensateurs (310) sont au moins partiellement positionnés sur le support de condensateur (200), les broches des condensateurs (310) étant électriquement raccordées à l'élément de raccordement électriquement conducteur (1000).

3. Module de commande de moteur (120) selon la revendication 2, dans lequel la partie de positionnement de condensateur (290) comprend une rainure de positionnement (210) enfoncée dans une surface (295) du support de condensateur (200) et une pluralité de goujons de positionnement (220) agencés, de manière dispersée, dans la rainure de positionnement (210), la pluralité de goujons de positionnement (220) séparant la rainure de positionnement (210) en une pluralité de zones de logement (230), les corps des condensateurs (310) étant insérés entièrement ou partiellement dans les zones de logement (230), ou bien
la partie de positionnement de condensateur (290) comprend une pluralité de rainures de positionnement (210) qui est enfoncée dans la surface (295) du support de condensateur (200) et espacées les unes des autres, les corps des condensateurs (310) étant entièrement ou partiellement insérés dans la rainure de positionnement (210), ou bien
la partie de positionnement de condensateur (290) comprend des trous de positionnement à travers le support de condensateur (200), les corps des condensateurs (310) étant installés dans les trous de positionnement.

4. Module de commande de moteur (120) selon la revendication 1, dans lequel des trous d'interconnexion (231) sont prévus sur le support de condensateur (200), les broches (312) des condensateurs (310) étant insérées ou passées dans les trous d'interconnexion (231) pour être électriquement raccordées avec l'élément de raccordement électriquement conducteur (1000).

5. Module de commande de moteur (120) selon la revendication 4, dans lequel l'élément de raccordement électriquement conducteur (1000) est monté sur le support de condensateur (200) par au moins l'un parmi un encliquetage, un raccordement par vis, le soudage, la fusion et un ajustement à la presse.

6. Module de commande de moteur (120) selon la revendication 1, dans lequel l'élément de raccordement électriquement conducteur (1000) comprend un premier élément électriquement conducteur (400) et un second élément électriquement conducteur (500) et le support de condensateur (200) a une nervure isolante (250) qui isole et fournit l'isolation du premier élément électriquement conducteur (400) du second élément électriquement conducteur (500).

7. Module de commande de moteur (120) selon la revendication 1, dans lequel le support de condensateur (200) a au moins une partie de support (280) s'étendant vers la direction de carte de circuit imprimé.

8. Module de commande de moteur (120) selon la revendication 1, dans lequel le module de commande de moteur (120) comprend en outre un élément électronique positionné sur le support de condensateur (200).

9. Module de commande de moteur (120) selon la revendication 1, dans lequel la pluralité de condensateurs (310) sont fixés par voie adhésive afin de former l'ensemble de condensateurs (300).

10. Module de commande de moteur (120) selon la revendication 1, dans lequel l'élément de raccordement électriquement conducteur (1000) comprend un premier élément électriquement conducteur (400) et un second élément électriquement conducteur (500), dans lequel les premières broches des condensateurs (310) sont électriquement raccordées au premier élément électriquement conducteur (400) et ses secondes broches sont raccordées au second élément électriquement conducteur (500) pour provoquer le raccordement de l'ensemble de condensateur (300) avec la carte de circuit imprimé (100).

11. Module de commande de moteur (120) selon la revendication 10, dans lequel le premier élément électriquement conducteur (400) a une première partie de raccordement de broche (420) selon une répartition en forme de peigne, et le second élément électriquement conducteur (500) a une seconde partie de raccordement de broche (520) selon une répartition en forme de peigne, la première partie de raccordement de broche (420) et la seconde partie de raccordement de broche (520) étant entrelacées l'une par rapport à l'autre.

12. Module de commande de moteur (120) selon l'une quelconque des revendications 1 à 11, dans lequel la pluralité de condensateurs (310) sont agencés de manière circonférentielle afin de former un ensemble de condensateurs annulaire (300),
ou bien la pluralité de condensateurs (310) sont agencés selon une forme de secteur afin de former un ensemble de condensateurs en forme de secteur (300),
ou bien la pluralité de condensateurs (310) sont agencés de manière linéaire afin de former un ensemble de condensateurs rectangulaire (300).

13. Module de commande de moteur (120) selon la revendication 12, dans lequel la pluralité de condensateurs (310) sont au moins agencés en deux rangées, dans lequel deux rangées adjacentes de condensateurs (310) sont décalées en butée l'une par rapport à l'autre dans une direction d'agencement.

14. Module de commande de moteur (120) selon l'une quelconque des revendications 1 à 13, dans lequel les condensateurs (310) sont posés à plat ou verticalement par rapport à l'élément de raccordement électriquement conducteur (1000).

15. Module de commande de moteur (120) selon l'une quelconque des revendications 1 à 13, dans lequel l'élément de raccordement électriquement conducteur (1000) comprend une partie de corps pour raccorder électriquement l'ensemble de condensateurs (300) et une borne de connexion disposée sur la partie de corps, la carte de circuit imprimé (100) étant prévue avec un point de raccordement sur lequel la borne de connexion est fixée.

16. Module de commande de moteur (120) selon l'une quelconque des revendications 1 à 13, dans lequel la carte de circuit imprimé (100) est prévue avec un circuit de commande et un circuit d'alimentation en énergie,
ou bien la carte de circuit imprimé (100) comprend une carte de circuit imprimé de commande et une carte de circuit imprimé d'alimentation en énergie qui sont prévues séparément, l'élément de raccordement électriquement conducteur (1000) raccordant, électriquement, la carte de circuit imprimé de commande et/ou la carte de circuit imprimé d'alimentation en énergie.

17. Actionneur (1200) comprenant un moteur électrique (800) et le module de commande de moteur (120) selon l'une quelconque des revendications 1 à 16.

18. Actionneur (1200) selon la revendication 17, dans lequel l'actionneur (1200) comprend en outre un boîtier (900) à l'intérieur duquel le moteur électrique (800) et le module de commande de moteur (120) sont logés, un arbre de sortie (810) du moteur électrique (800) s'étendant à travers la carte de circuit imprimé (100) et/ou l'ensemble de condensateurs (300).

19. Appareil de frein électromécanique comprenant l'actionneur (1200) selon l'une quelconque des revendications 17 à 18 et un frein directement ou indirectement entraîné par l'actionneur (1200).
